# EUROPÄISCHE PATENTANMELDUNG

(11) **EP 1 087 376 A2**
(43) Veröffentlichungstag der Anmeldung: **28.03.2001**
(21) Anmeldenummer: 00118474.6
(22) Anmeldetag: 25.08.2000
(51) Int. Cl.: G10K 15/02

(54) **Vorrichtung zur elektroakustischen Geräuscherzeugung bei einem Kraftfahrzeug**

(30) Priorität: 21.09.1999 DE 19945259
(71) Anmelder: Bayerische Motoren Werke Aktiengesellschaft, 80809 München (DE)
(72) Erfinder: Freymann, Raymond, Dr., 80935 München (DE); Spannheimer, Helmut, Dr., 85630 Neukeferloh (DE)

(57) **Zusammenfassung**

Die Erfindung betrifft eine Vorrichtung zur elektroakustischen Geräuscherzeugung bei einem Kraftfahrzeug mit einem Schalldrucksensor, einer Signalverarbeitungseinheit, welche mit dem Schalldrucksensor verbunden ist und Signale von diesem erhält und verarbeitet, und einer Lautsprechereinheit mit zumindest einem Lautsprecher, welche mit der Signalverarbeitungseinheit verbunden ist, wobei der Schalldrucksensor im Bereich des Ansaug- oder Abgastraktes des Kraftfahrzeugs angeordnet ist.

Um eine möglichst variable, zugleich dennoch authentische Geräuscherzeugung zu gewährleisten, wird vorgeschlagen, einen Synthesizer zu verwenden, der mit der Signalverarbeitungseinheit derart verbunden oder in diese integriert ist, daß den aus den Schalldrücken erzeugten Signalen synthetische Klangkomponenten beimischbar sind.

## Beschreibung

Die Erfindung betrifft eine Vorrichtung zur elektroakustischen Geräuscherzeugung bei einem Kraftfahrzeug.

Bei Personenkraftfahrzeugen ist es bekannt, ein Sound-Design durchzuführen. Grundsätzlich sollte den Fahrzeuginsassen ein hohes Maß an Akustikkomfort geboten werden, wobei insbesondere auf einen geringen Geräuschpegel Wert zu legen ist. Andererseits soll der Fahrer aber auch den Betriebszustand des Motors exakt erkennen, wozu eine Fahrgeräuschrückkopplung, insbesondere eine Rückkopplung des Motorgeräusches, zweckmäßig ist. Im übrigen gilt es, die Emissionsvorschriften (dazu gehören auch die Schallemissionsvorschriften) einzuhalten.

Um diesen Zielkonflikt zu lösen ist es bekannt, das Innengeräusch durch passive Abstimm-Maßnahmen, beispielsweise durch Aggregatlagerungen, zu verändern.

Ferner ist neben einer guten Schalldämmung die synthetische Erzeugung von Innengeräuschen oder aber auch die Abspeicherung von Klangkomponenten und die elektroakustische Einspielung in den Innenraum eines Kraftfahrzeuges bekannt (vgl. EP 0 469 023 B1, DE 27 34 948 A1).

Eine Quelle mit starker Lastabhängigkeit stellen die Abgasanlage und der Ansaugtrakt dar. Eine allgemeine Anhebung des abgestrahlten Schalls aus diesen Anregungsquellen ist aber wegen der oben genannten Emissions- und Außengeräuschvorschriften nicht zielführend. Im übrigen wird die Einleitung dieser Geräuschkomponenten in den Innenraum durch eine hohe Karosseriedämmung, die zur Minderung von Wind- und Rollgeräuschen sowie zur Unterdrückung störender, mechanischer Motorgeräusobkomponenten erforderlich ist, weitgehend unterbunden. Eine gezielte mechanische Einleitung in den Fahrzeug-Innenraum ist zwar prinzipiell möglich und bekannt (DE 44 35 296 A1, DE 42 33 252 C1), hat sich aber bezüglich der Kosten und der Anordnung im Fahrzeug als nachteilig herausgestellt.

Eine rein synthetische Herstellung eines Motorgeräusches hat sich ebenfalls als nachteilig erwiesen, da damit in der Regel kein absolut authentisches Motorgeräusch nachempfunden werden kann.

In der DE 198 45 736 A1 ist daher vorgeschlagen, den Schalldruck im Ansaug- oder Abgastrakt eines Verbrennungsmotors aufzunehmen, zu verarbeiten und die so erzeugten Signale in den Innenraum eines Kraftfahrzeugs einzuspielen. Der Ansaug- bzw. der Abgastrakt stellen akustische Quellen mit besonders hoher Lastabhängigkeit dar. Bereits sehr einfache Ausführungsformen können daher relativ naturgetreue akustische Signale in den Fahrzeug-Innenraum übermitteln. Durch den Einsatz von Filtereinrichtungen in einer Signalverarbeitungseinheit der oben beschriebenen Vorrichtung ist eine Variierung der Geräuschcharakteristik möglich. Allerdings ergeben sich hinsichlich der Variabilität zur Änderung der Geräuschzusammensetzung Grenzen. Beispielsweise können solche Frequenzspektren nicht erzeugt werden, welche in den von dem Schalldrucksensor zur Verfügung gestellten Signalen nicht enthalten sind.

Aufgabe der vorliegenden Erfindung ist daher eine Verbesserung einer eingangs genannten Vorrichtung zur elektroakustischen Geräuscherzeugung in der Weise, daß eine möglichst variable, zugleich dennoch authentische Geräuscherzeugung gewährleistet werden kann.

Diese Aufgabe wird durch die im Anspruch 1 genannten Merkmale gelöst.

Demgemäß wird einer Vorrichtung, wie sie aus der DE 198 45 736 A1 bekannt ist, noch ein Synthesizer zugeschaltet, der auf künstlichem Wege Signale oder Geräusche erzeugt und diese Klangkomponenten den aus den Schalldrücken erzeugten Signalen beimischt. Dadurch können auch Geräusche mit solchen Frequenzen in den Fahrzeuginnenraum eingespielt werden, die in den Ansaug- oder Abgastrakten nicht vorkommen.

Zur Erzeugung eines besonderes authentischen Motorgeräusches hat es sich als vorteilhaft erwiesen, Sinusfrequenzen zu erzeugen, die auf die Drehfrequenzen des Antriebsmotors zurückzuführen sind. Insbesondere können ein oder mehrere Sinusfrequenzen erzeugt werden, die beispielsweise einem halb- und/oder ganzzahligen Vielfachen der Motordrehzahl entsprechen.

Durch die Beimischung der synthetisierten Klangkomponenten zu den über den Schalldrucksensor erzeugten Geräuschen kann so ein aus Sicht eines Sounddesigners wünschenswerter Gesamteindruck erzeugt werden, der weiterhin authentisch klingt.

Eine besonders einfache Ausführungsform ist dadurch gekennzeichnet, Amplituden und auch Phasen von zuzumischenden Sinusfrequenzen in einer Tabelle in Abhängigkeit von der Antriebsmotordrehzahl abzulegen. Je nach Motordrehzahl können die entsprechenden Amplituden- und Phasenwerte aus der Tabelle ausgelesen und vom Synthesizer in Abhängigkeit davon Signale erzeugt werden. Damit erreicht man eine auf die Drehzahl abgestimmte Klangcharakteristik. Natürlich bestimmt dabei das Amplitudenverhältnis der verschiedenen Sinustöne maßgeblich die Gesamtklangcharakteristik. Die Amplitude des vom Synthesizer einzuspielenden Signals kann aber auch in Abhängigkeit von beispielsweise der Drosselklappenstellung, der Fahrpedalstellung oder anderer Laatsignale beeinflußt werden. Gerade durch Berücksichtigung von Signalen, die mit einer Last gekoppelt sind, ist auch eine Lastabhängigkeit des erzeugten Geräusches zu erzielen.

Gemäß einer alternativen Ausführungsform kann das Signal vom Schalldrucksensor selbst als Eingangsgröße für den Synthesizer dienen. Auch dieses Eingangssignal ist in besonderer Weise lastabhängig.

Sollte eine bestimmte Klangcharakteristik in Abhängigkeit von verschiedenen Fahrzeugbetriebsbedingungen angestrebt werden, so müßten die Amplituden- und/oder Phasenverhältnisse der einzelnen Töne in einer erforderlichen Art angepaßt werden. Neben einer Einflußnahme über die Drosselklappenstellung, die Fahrpedalstellung, die Drehzahl des Antriebsmotors, die Fahrzeuggeschwindigkeit können auch andere Parameter, wie z. B. die Kick-down-Stellung, eine Gangwahl oder beispielsweise ein Signal, ob ein Cabrioverdeck offen oder zu ist, zur Bestimmung der Amplituden- und/oder Phasenverhältnisse genutzt werden. Dabei ist es möglich mehrere Tabellen vorzusehen, aus denen Werte in Abhängigkeit von solchen oder anderen Fahrzeugparametern ausgewählt werden.

Eine besonders vorteilhafte Ausführungsform stellt sich dadurch dar, daß ein Schubbetrieb erkannt und eine eigene Klangabstimmung dafür geschaffen wird. Beispielsweise kann beim Übergang in den Schubbetrieb ein langsam anschwellendes Geräusch erzeugt werden. Es ist auch möglich, während des Schubbetriebes ein stochastisches Geräusch (blubbern, brabbeln) zu erzeugen und zusätzlich einzuspielen. Dazu ist es erforderlich, eine Einheit vorzusehen, mit welcher der Schubbetrieb detektiert werden kann. Je nach Auswertungssignal muß dann ein für diesen Schubbetrieb charakteristisches Klangbild ausgewählt und ein Signal an den Synthesizer abgegeben werden. Dieser erzeugt dann beim Schubbetrieb ein gewünschtes Geräusch.

Insgesamt ergibt sich mit der vorliegenden Erfindung eine weitere Verbesserung des Innengeräusches, insbesondere im Hinblick auf die Variabilität hinsichtlich verschiedener Fahrzeugbetriebsbedingungen.

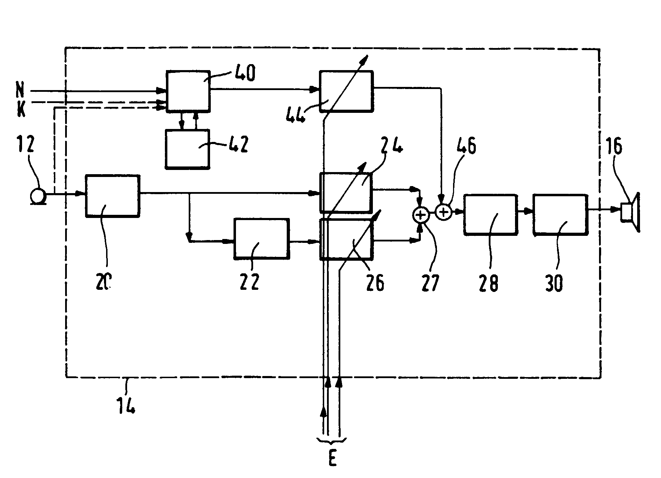

Die vorliegende Erfindung wird, auch im Hinblick auf weitere Vorteile und Merkmale, anhand eines Ausführungsbeispiels und unter Bezugnahme auf die beiliegende Zeichnung näher erläutert.

Die einzige Figur stellt eine schematische Schaltskizze eines Ausführungsbeispiels der erfindungsgemäßen Vorrichtung dar.

In einem Ansaugtrakt eines Motors (nicht dargestellt) ist ein Schalldrucksensor 12 vorgesehen, welcher die durch die Fahrdynamik hervorgerufenen Luftdruckänderungen aufnimmt und über eine Leitung an eine Signalverarbeitungseinheit 14 abgibt. Alternativ kann der Schalldrucksensor auch im Abgastrakt oder nahe beim Ansaug- oder Abgastrakt, z.B. im Bereich des Ansaugtrakteingangs oder des Abgastragtausgangs, angeordnet sein.

Die Signalverarbeitungseinheit 14 verarbeitet u. a. die Signale vom Schalldrucksensor 12 und gibt sie an eine Lautsprechereinheit 16 ab, welche die von der Signalvorrichtungseinheit 14 erzeugten Signale in akustische Signale umwandelt und in den Innenraum eines Kraftfahrzeugs einspielen. Als Lautsprecher können separate Lautsprecher aber auch die Lautsprecher einer bereits vorhandenen Audio- oder Kommunikationsanlage eines Fahrzeugs verwendet werden.

Die Signalverarbeitungseinheit 14 umfaßt im vorliegenden Fall im wesentlichen zwei Äste.

Zum einen wird das von dem Schalldrucksensor 12 stammende Signal in einer Filtereinheit 20, 22, 24, 26, die nachfolgend noch beschrieben wird, verarbeitet und nach einer entsprechenden Verstärkung an die Lautsprechereinheit 16 abgegeben. In einem zweiten Ast werden auf synthetische Weise Klangkomponenten entsprechende Signale erzeugt und den vom Schalldrucksensor 12 stammenden Signalen beigemischt. Mit dieser Vorgehensweise läßt sich ein authentisch klingendes Innengeräusch erzeugen, welches in großen Bereichen beliebig veränderbar ist.

Die Einzelheiten der beiden Signaläste werden nachfolgend beschrieben.

Im ersten Ast wird das Signal vom Schalldrucksensor 12 zunächst durch einen Hochpaßfilter 20 geschickt, um niederfrequente Schallanteile, die zu großen Membranbewegungen führen würden, zu eliminieren. Das vom Hochpaßfilter 20 abgegebene Signal wird in zwei Zweige aufgespalten. In einem Zweig wird das Signal durch einen Tiefpaßfilter 22 geführt und dann an ein Potentiometer 26 geleitet, welches je nach seiner Einstellung ein mehr oder minder abgeschwächtes Signal an einen Addierer 27 weitergibt. Die Einstellung des Potentiometers bestimmt sich über Eingangsgrößen E, die nachfolgend noch erläutert werden.

Natürlich können in anderen Ausführungsformen auch andere Filteranordnungen in den verschiedenen Ästen verwendet werden.

Das Signal in dem anderen Zweig des ersten Astes läuft direkt zu einem weiteren Potentiometer 24 und besitzt daher Breitbandanteile. Nach dem Potentiometer 24 wird dieses Signal ebenfalls dem Addierer 27 zugeführt.

Im Addierer 27 werden die beiden von den Potentiometern 24 und 26 stammenden Signale zusammengeführt und addiert (gemischt).

In dem anderen Ast, dem synthetischen Ast, ist ein Synthesizer 40 vorgesehen, der zur Erzeugung von Sinusfrequenzen ausgebildet ist. Der Synthesizer 40 weist bei dem vorliegenden Ausführungsbeispiel einen Eingang auf, in dem das Drehzahlsignal N des Antriebsmotors eingespeist wird. In Abhängigkeit dieses Drehzahlsignals N erzeugt der Synthesizer 40 vorliegend mehrere Sinustöne, deren Frequenzen halb- und ganzzahligen Vielfachen der Motordrehzahl entsprechen. Die Amplituden und Phasen der jeweiligen Sinusfrequenzen sind von der Motordrehzahl abhängig und werden aus einer Speichereinheit 42 ausgelesen. Zu diesem Zweck gibt der Synthesizer 40 an die Speichereinheit 42 das Drehzahlsignal ab. In der Speichereinheit 42 ist zumindest eine Tabelle vorhanden, in der die Amplituden und Phasen in Abhängigkeit von der Motordrehzahl gespeichert sind. Aufgrund der aus der Tabelle und der Speichereinheit 42 ausgelesenen Größen erzeugt der Synthesizer 40 ein Signal mit einer bestimmten Klangcharakteristik. Natürlich bestimmt dabei das Amplitudenverhältnis, die Phasenlage sowie die Anzahl der Sinustöne die Klangcharakteristik. Das von dem Synthesizer 40 erzeugte Signal wird einem weiteren Potentiometer 44 zugeleitet, welches die Signalstärke definiert.

In einem weiteren Addierer 46 wird das Signal für die synthetische Klangerzeugung dem Signal aus der Klangerzeugung über den Schalldrucksensor beigemischt. Dabei wird die Mischung vorliegend insgesamt von der Einstellung der Potentiometer 24, 26, 44 bestimmt.

Anschließend wird das Gesamtsignal durch einen weiteren Tiefpaßfilter 28 geleitet, so daß die Frequenzen nach oben begrenzt werden.

Alternativ kann das Signal jeden Zweiges durch einen eigenen Tiefpaßfilter geleitet werden und erst nach diesen Tiefpaßfiltern in einem Addierer zusammengemischt werden. Darüber hinaus ist es möglich, an dieser Stelle der Anordnung ein Equalizer-Filter vorgesehen werden, mit dem das Übertragungsverhalten des Lautsprechers oder des Fahrzeuginnenraumes beeinflußt wird.

Schließlich wird das so verarbeitete Signal in einem Verstärker 30 verstärkt und an die Lautaprechereinheit 16 des Fahrzeugs abgegeben. Diese wandelt das elektrische Signal in ein akustisches Signal um, welches ein sehr authentisches, jedoch in einer gewünschten Weise variiertes Signal in den Innenraum eines Kraftfahrzeugs ergibt.

Vorliegend wird die Justierung der Potentiometer 24, 26 und 44 manuell vorgenommen. Durch eine Veränderung der entsprechenden Potentiometer kann die Gewichtung der jeweiligen Zweige verändert werden und zwar zwischen einem Breitband- und Tiefbandanteil des vom Schalldrucksensor stammenden Signals einerseits und dem synthetischen Signal auf der anderen Seite. Natürlich könnten die Potentiometer natürlich auch fest eingestellt sein.

Alternativ kann die Steuerung der Potentiometer auch elektronisch erfolgen und von Fahrbetriebsbedingungen abhängen. In der Figur sind dazu Signaleingänge E dargestellt, über die diese Einstellung erfolgen kann. Beispielsweise kann die Verstellung der Potentiometer 24, 26 und 44 in Abhängigkeit von der Drosselklappenstellung, dem Drehzahlsignal des Antriebsmotors oder der Geschwindigkeit erfolgen. Zu diesem Zweck könnte die Signalverarbeitungseinheit 14 an einen CAN-Bus angeschlossen sein und eine zusätzliche Steuereinheit besitzen, welche die Steuerung der Potentiometer 24, 26 und 44 übernimmt.

In einer weiteren alternativen Ausführungsform - gekennzeichnet durch die gestrichelt dargestellten Eingangsgrößen des Synthesizers 40 - können auch andere Fahrzeugbetriebsparameter zur Erzeugung und/oder Steuerung des synthetischen Signals verwendet werden. Beispielsweise können die Anzahl der Sinustöne, die Entscheidung ob halb- und ganzzahlige Vielfache der Frequenzen der Motordrehzahl verwendet werden, die Amplituden- und die Phasenverhältnisse von Eingangsgrößen wie der Drosselklappenstellung, der Fahrpedalstellung, der Fahrzeuggeschwindigkeit und der Motordrehzahl abhängig gemacht werden. Unter den Eingangsgrößen K können auch noch andere Parameter wie die Kick-down-Stellung, die Gangwahl oder ein Signal, ob ein Cabrioverdeck geöffnet oder geschlossen ist, eingelesen werden. Insgesamt können die gleichen Parameter sowohl für die Eingangsgrößen E als auch K verwendet werden. Je nach Ausbildung des Synthesizers und Berücksichtigung verschiedener Eingangsparameter können so besonders angepaßte, dynamische Klangeindrücke erreicht werden. Dazu ist es auch möglich, in der Speichereinheit 42 mehrere Tabellen zu hinterlegen, die je nach Eingangsparameter ausgelesen werden. Das in den Innenraum einzuspielende Geräusch kann dabei in einem großen Bereich verändert werden ohne von der Authentizität des Geräusches aus dem Ansaugbereich in übermäßigem Maße abzuweichen.

Als besonders vorteilhaft hat sich die Berücksichtigung des Signals vom Schalldrucksensor im Synthesizer 40 gezeigt (vgl. entsprechende Strichlinierung in der Zeichnung). Durch eine Steuerung der Klangcharakteristik und Dynamik über das Signal aus dem Schalldrucksensor 12 kann eine besondere Veränderung in Bezug auf die Lastabhängigkeit erreicht werden.

### Bezugszeichenliste

- 12: Schalldrucksensor
- 14: Signalverarbeitungseinheit
- 16: Lautsprecher
- 20: Hochpaßfilter
- 22: Tiefpaßfilter
- 24: Potentiometer
- 26: Potentiometer
- 27: Addierer
- 28: Tiefpaßfilter
- 30: Verstärker
- 40: Synthesizer
- 42: Speichereinheit
- 44: Potentiometer
- 46: Addierer
- E: Eingangssignale
- N: Drehzahlsignal
- K: weitere Eingangssignale

## Patentansprüche

1. Vorrichtung zur elektroakustischen Geräuscherzeugung bei einem Kraftfahrzeug mit einem Schalldrucksensor (12), einer Signalverarbeitungseinheit (14), welche mit dem Schalldrucksensor (12) verbunden ist und Signale von diesem erhält und verarbeitet, und einer Lautsprechereinheit (16) mit zumindest einem Lautsprecher, welche mit der Signalverarbeitungseinheit (14) verbunden ist, wobei der Schalldrucksensor (12) im Bereich des Ansaug- oder Abgastraktes des Kraftfahrzeugs angeordnet ist,
dadurch gekennzeichnet,
daß ein Synthesizer (40) vorgesehen ist, der mit der Signalverarbeitungseinheit (14) derart verbunden oder in diese integriert ist, daß den aus den Schalldrücken erzeugten Signalen synthetische Klangkomponenten beimischbar sind.

2. Vorrichtung nach Anspruch 1,
dadurch gekennzeichnet,
daß der Synthesizer (40) zur Erzeugung von einer oder mehreren Sinusfrequenzen ausgebildet ist, deren Frequenz von einer Motordrehzahl abhängig ist.

3. Vorrichtung nach Anspruch 2,
dadurch gekennzeichnet,
daß eine Vorrichtung (42) mit einer Tabelle vorgesehen ist und in der Tabelle die Amplituden und/oder Phasen der Sinusschwingungen in Abhängigkeit von der Motordrehzahl abgespeichert sind.

4. Vorrichtung nach einem der vorhergehenden Ansprüche,
dadurch gekennzeichnet,
daß der Synthesizer (40) zumindest einen Eingang (K) für Eingangssignale, wie der Drosselklappenstellung, der Fahrpedalstellung und/oder anderer Eingangaparameter entsprechender Signale, umfaßt und derart ausgebildet ist, daß die Amplitude und/oder die Klangcharakteristik des vom Synthesizer (40) erzeugten Signals in Abhängigkeit von den Eingangasignalen veränderbar sind.

5. Vorrichtung nach einem der vorhergehenden Ansprüche,
dadurch gekennzeichnet,
daß der Synthesizer (40) einen Eingang für ein Signal umfaßt, das auf der erfaßten Schalldruckamplitude basiert, und derart ausgebildet ist, daß die Amplitude und/oder die Klangcharakteristik des vom Synthesizer (40) erzeugten Signals in Abhängigkeit von diesem Signal veränderbar sind.

6. Vorrichtung nach einem der vorhergehenden Ansprüche,
dadurch gekennzeichnet,
daß der Synthesizer (40) eine Bestimmungseinheit enthält oder mit einer solchen verbunden ist, die einen Eingang für eine Eingangsgröße enthält, aus der ein Schubbetrieb detektierbar ist, daß die Bestimmungseinheit zur Erfassung des Schubbetriebes ausgebildet ist und ein entsprechendes Signal an den Synthesizer (40) abgibt und daß der Synthesizer derart ausgebildet ist, um bei einem Schubbetrieb ein vordefiniertes Geräusch nachzubilden.

7. Vorrichtung nach einem der vorhergehenden Ansprüche,
dadurch gekennzeichnet,
daß die Signalverarbeitungseinheit (14) eine Filtereinrichtung (20, 22) zur Filterung des vom Schalldrucksensor (12) stammenden Signals umfaßt und die Filtereinrichtung (20, 22) zur Veränderung der Klangcharakterisitk des vom Schalldrucksensor (12) aufgenommenen Geräusches ausgebildet ist.

8. Vorrichtung nach einem der vorhergehenden Ansprüche,
dadurch gekennzeichnet,
daß die Signalverarbeitungseinheit (14) derart ausgebildet ist, um das vom Schalldrucksensor (12) sowie dem Synthesizer (40) stammende Gesamtgeräusch im Abhängigkeit von Parametern, insbesondere geschwindigkeitsabhängig, lastabhängig und/oder drehzahlabhängig, mischen zu können.
